# EUROPÄISCHE PATENTSCHRIFT

(11) **EP 2 410 292 B1**
(45) Veröffentlichungstag und Bekanntmachung des Hinweises auf die Patenterteilung: **14.02.2018**
(21) Anmeldenummer: 11170632.1
(22) Anmeldetag: 21.06.2011
(51) Int. Cl.: G01C 15/00

(54) **Verfahren zur Einstellung der Laserleistung**
Method for setting the laser output
Procédé de réglage des performances laser

(30) Priorität: 21.07.2010 DE 102010031634
(43) Veröffentlichungstag der Anmeldung: 25.01.2012
(73) Patentinhaber: HILTI Aktiengesellschaft, 9494 Schaan (LI)
(72) Erfinder: Dang, Lieu-Kim, 9473 Gams (CH); Winter, Andreas, 6800 Feldkirch (AT); Lukic, Sasha, 9470 Buchs (CH)
(74) Vertreter: Hilti Aktiengesellschaft Corporate Intellectual Property

(56) Entgegenhaltungen:
- EP-A2- 2 157 404
- DE-C1- 4 421 073
- US-B1- 6 195 901

## Beschreibung

Die vorliegende Erfindung betrifft ein Verfahren zur Einstellung der Laserleistung eines Laserstrahls gemäß dem Oberbegriff des Anspruchs 1.

Um Nivellier- oder Markierungsarbeiten im Innen- und Außenbereich durchzuführen, sind Lasergeräte bekannt, die punkt- und/oder linienförmige Laserstrahlen erzeugen. Die Laserstrahlen dienen dazu, Referenzpunkte oder Referenzlinien auf Wänden, Decken und Böden anzuzeigen. Bei diesen Lasergeräten wird zwischen Rotationslasergeräten, die einen linienförmigen Laserstrahl durch Rotation einer Laserstrahlquelle oder einer strahlumlenkenden Optik um eine Rotationsachse erzeugen, und Punkt- und/oder Linienlasergeräten, die punkt- und/oder linienförmige Laserstrahlen mittels strahlformender Optiken, wie Zylinderlinsen und Prismen, erzeugen, unterschieden.

Bekannte Rotationslasergeräte werden in einem ersten Betriebsmodus, dem Rotationsmodus, einem zweiten Betriebsmodus, dem Linienmodus, und/oder einem dritten Betriebsmodus, dem Punktmodus, betrieben. Der Laserstrahl wird im Rotationsmodus mit einer konstanten Rotationsgeschwindigkeit um die Rotationsachse bewegt. Im Linienmodus wird der Laserstrahl in einem begrenzten Winkelbereich zwischen einem ersten und zweiten Endpunkt hin- und herbewegt und im Punktmodus ruht der Laserstrahl, d.h. die Rotationsgeschwindigkeit verschwindet.

Bei Lasergeräten, die ohne Schutzmassnahmen, wie Schutzbrillen, eingesetzt werden dürfen, ist die maximal erlaubte Laserleistung begrenzt. Das menschliche Auge ist bei zufälligem, kurzzeitigem Hineinsehen in den Laserstrahl durch den Lidschlussreflex geschützt. Die maximal erlaubten Laserleistungen sind vom Betriebsmodus, in dem das Lasergerät betrieben wird, abhängig. Im Rotationsmodus rotiert der Laserstrahl mit einer konstanten Rotationsgeschwindigkeit um die Rotationsachse und das menschliche Auge wird nur kurzzeitig vom Laserstrahl getroffen. Im Linienmodus erfolgt im Bereich der Endpunkte ein Abbremsen und Beschleunigen des Laserstrahls, wobei der Laserstrahl in den Endpunkten ruht. Trifft der Laserstrahl im Bereich der Endpunkte auf das menschliche Auge, ist der Anteil des Laserstrahls, der vom Auge absorbiert wird, größer und die Gefahr einer Beschädigung steigt.

EP 2 157 404 A2 offenbart ein Rotationslasergerät mit einer Lasereinrichtung, die einen Laserstrahl erzeugt, einer Dreheinrichtung, die die Lasereinrichtung um eine Rotationsachse bewegt, und einer Steuereinrichtung. Die Dreheinrichtung ist als Schrittmotor ausgebildet, der den Drehwinkel, die Drehrichtung oder die Drehgeschwindigkeit einstellt.

DE 44 21 073 C1 offenbart ein bekanntes Rotationslasergerät, das in einem Rotationsmodus und einem Punktmodus betrieben wird. Die Laserleistung des Laserstrahls wird in Abhängigkeit von der Drehzahl der Rotationsoptik eingestellt. Ein Linienmodus ist in der DE 44 21 073 C1 nicht vorgesehen.

Ein weiteres Problem von bekannten Rotationslasergeräten, die im Linienmodus betrieben werden, besteht darin, dass die Laserlinie im Bereich der Endpunkte unscharf wird. Die Unschärfe der Laserlinie entsteht durch das Bremsen und anschließende Beschleunigen der Lasereinrichtung durch die Motoreinheit.

Wünschenswert wäre es, ein Lasergerät und ein Verfahren zur Einstellung der Laserleistung hinsichtlich der oben erläuterten Nachteile zu verbessern. Die Aufgabe der vorliegenden Erfindung besteht demgegenüber darin, ein Verfahren zur Einstellung der Laserleistung an einem Lasergerät bereitzustellen, bei dem der Laserstrahl im Linienmodus möglichst gut sichtbar ist und die Gefahr einer Schädigung des Bedieners reduziert ist. Außerdem soll die Laserlinie möglichst genau und scharf abgegrenzt sein.

Diese Aufgabe wird bei dem eingangs genannten Verfahren zur Einstellung der Laserleistung eines Laserstrahls durch die Merkmale des unabhängigen Anspruchs 1 gelöst. Erfindungsgemäß ist bei dem Verfahren zur Einstellung der Laserleistung vorgesehen, dass die Laserleistung des Laserstrahls bei Unterschreiten eines ersten Drehwinkels, der dem ersten Endpunkt der Laserlinie entspricht, und bei Überschreiten eines zweiten Drehwinkels, der dem zweiten Endpunkt der Laserlinie entspricht, auf Null reduziert wird. Die Einstellung der Laserleistung abhängig vom Drehwinkel der Dreheinrichtung ermöglicht es, die maximal verfügbare Laserleistung der Lasereinrichtung optimal auszunutzen und gleichzeitig die Gefahr, dass das Auge eines Bedieners geschädigt wird, zu reduzieren.

Die Dreheinrichtung wird besonders bevorzugt in einem ersten Winkelbereich zwischen dem ersten Endpunkt der Laserlinie und dem ersten Wendepunkt und in einem zweiten Winkelbereich zwischen dem zweiten Endpunkt der Laserlinie und dem zweiten Wendepunkt abgebremst bzw. beschleunigt. Dadurch, dass das Abbremsen und Beschleunigen der Dreheinrichtung außerhalb der Laserlinie erfolgt, kann der Laserstrahl innerhalb der Laserlinie mit maximaler Laserleistung ausgestrahlt werden. Das sprunghafte Umschalten der Laserleistung von einer maximalen Laserleistung auf Null führt zu einer scharf begrenzten Laserlinie zwischen dem ersten und zweiten Endpunkt.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung.

Es zeigen:
- Fig. 1: ein Rotationslasergerät mit einer Encodereinrichtung zur Messung eines Drehwinkels mit einer Dreheinrichtung; und
- Fign. 2a,b: eine Verfahrensvariante zur Steuerung der Laserleistung in Abhängigkeit vom Drehwinkel der Dreheinrichtung.

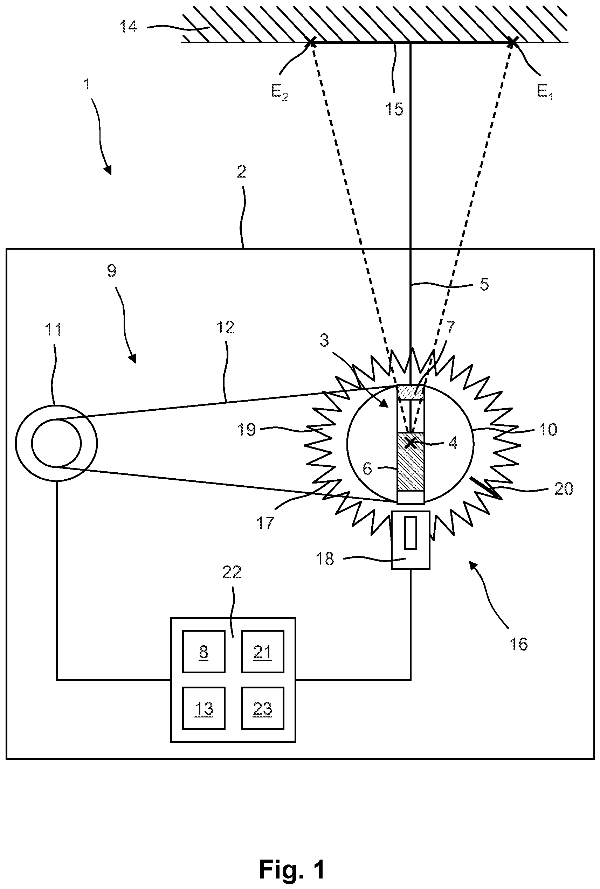

**Fig. 1** zeigt in einer schematischen Darstellung ein Lasergerät **1,** das als Rotationslasergerät ausgebildet und in einem Linienmodus betreibbar ist. Das Rotationslasergerät 1 umfasst ein Gehäuse **2** und eine in dem Gehäuse 2 angeordnete Lasereinrichtung **3,** die um eine Rotationsachse **4** drehbar ausgebildet ist.

Die Lasereinrichtung 3 erzeugt einen Laserstrahl **5** und umfasst eine Strahlquelle **6** und ein optisches Element **7** zur Strahlformung des Laserstrahls, das als Strahlformungsoptik bezeichnet wird. Die Strahlquelle 6 ist als Halbleiterlaser ausgebildet, der einen Laserstrahl 5 im sichtbaren Spektrum, beispielsweise einen roten Laserstrahl mit einer Wellenlänge von 635 nm oder einen grünen Laserstrahl mit einer Wellenlänge von 532 nm, erzeugt. Nach dem Austritt des Laserstrahls 5 aus der Strahlquelle 6 kommt es aufgrund der Divergenz zu einer Aufweitung des Laserstrahls 5. Mit Hilfe der Strahlformungsoptik 7 wird der Laserstrahl kollimiert und ein paralleler Laserstrahl erzeugt. Die Steuerung der Strahlquelle 6 erfolgt über eine erste Steuereinrichtung **8.**

Der Laserstrahl 5 verläuft in einer Ebene, die senkrecht zur Rotationsachse 4 ausgerichtet ist. Die Lasereinrichtung 3 ist mit einer Dreheinrichtung **9** verbunden, die die Lasereinrichtung 3 um die Rotationsachse 4 zwischen einem ersten Wendepunkt und einem zweiten Wendepunkt hin- und herbewegt. Die Dreheinrichtung 9 umfasst eine drehbare Welle **10,** eine Motoreinheit **11** und eine Übertragungseinrichtung, die in Form eines Zahnriemens **12** ausgebildet ist und die Bewegung der Motoreinheit 11 auf die Welle 10 überträgt. Die Lasereinrichtung 3 ist mit der drehbaren Welle 10 gekoppelt und um die Rotationsachse 4 drehbar. Die Steuerung der Dreheinrichtung 9 erfolgt über eine zweite Steuereinrichtung **13.**

Im Linienmodus des Rotationslasergerätes 1 wird der Laserstrahl 5 auf eine Zielfläche **14** projiziert. Auf der Zielfläche 14 entsteht zwischen einem ersten Endpunkt **E₁** und einem zweiten Endpunkt **E₂** eine Laserlinie **15.**

Die Laserleistung des Laserstrahls 5 wird in Abhängigkeit vom Drehwinkel oder der Winkelgeschwindigkeit der Dreheinrichtung 9 gesteuert. Der Drehwinkel wird mit einer Messeinrichtung **16,** die als Encodereinrichtung ausgebildet ist, bestimmt. Die Encodereinrichtung 16 umfasst eine Rastscheibe **17,** die mit der drehbaren Welle 10 drehfest verbunden ist, und einen Photointerrupter **18.** Die Rastscheibe 17 weist eine Mehrzahl von Rastelementen **19** auf, die identisch ausgebildet und über den äußeren Umfang der Rastscheibe 17 verteilt sind. Auf der Rastscheibe 17 ist neben den Rastelementen 19 ein Referenzelement **20** vorgesehen, das der Nullposition des Drehwinkels entspricht. Vor einer Winkelmessung wird die Encodereinrichtung 16 über das Referenzelement 20 kalibriert. Dazu wird die drehbare Welle 10 um 360° um die Rotationsachse 4 gedreht und das Muster der Rastscheibe 17 mit dem Photointerrupter 18 erfasst. Die Auswertung des Photointerrupters 18 und die Steuerung der Encodereinrichtung 16 erfolgen über eine dritte Steuereinrichtung **21.**

Die erste Steuereinrichtung 8 zur Steuerung der Strahlquelle 6, die zweite Steuereinrichtung 13 zur Steuerung der Dreheinrichtung 9 und die dritte Steuereinrichtung 21 zur Steuerung der Encodereinrichtung 16 sind in eine Kontrolleinrichtung, die als Mikrocontroller **22** ausgebildet ist, integriert.

Die Winkelgeschwindigkeit der Dreheinrichtung 9 wird vom Mikrocontroller 22 aus dem Drehwinkel und der entsprechenden Zeit, die von einer Zeiteinrichtung **23** gemessen wird, berechnet. Die Zeiteinrichtung 23 ist ebenfalls in den Mikrocontroller 22 integriert. Die Auflösung der Winkelgeschwindigkeit ist in diesem Fall durch die Breite der Rastelemente 19 bestimmt.

Fig. 1 zeigt eine Lasereinrichtung 3, bei der der Laserstrahl 5, der aus der Strahlquelle 6 ausgekoppelt wird, senkrecht zur Rotationsachse 4 ausgerichtet ist. Alternativ kann die Strahlquelle 6 so angeordnet sein, dass der Laserstrahl 5 parallel zur Rotationsachse 4 verläuft. In diesem Fall ist ein optisches Element zur Strahlumlenkung vorgesehen, das als Umlenkungsoptik bezeichnet wird und den Laserstrahl um 90° in eine Ebene senkrecht zur Rotationsachse 4 umlenkt. Die Strahlquelle 6, die den Laserstrahl erzeugt, ist in einer ersten Variante mit der drehbaren Welle 10 drehfest verbunden und wird mit der drehbaren Welle 10 um die Rotationsachse 4 gedreht. In einer zweiten Variante ist die Strahlquelle 6 von der drehbaren Welle 10 entkoppelt und die Umlenkungsoptik ist mit der drehbaren Welle 10 drehfest verbunden.

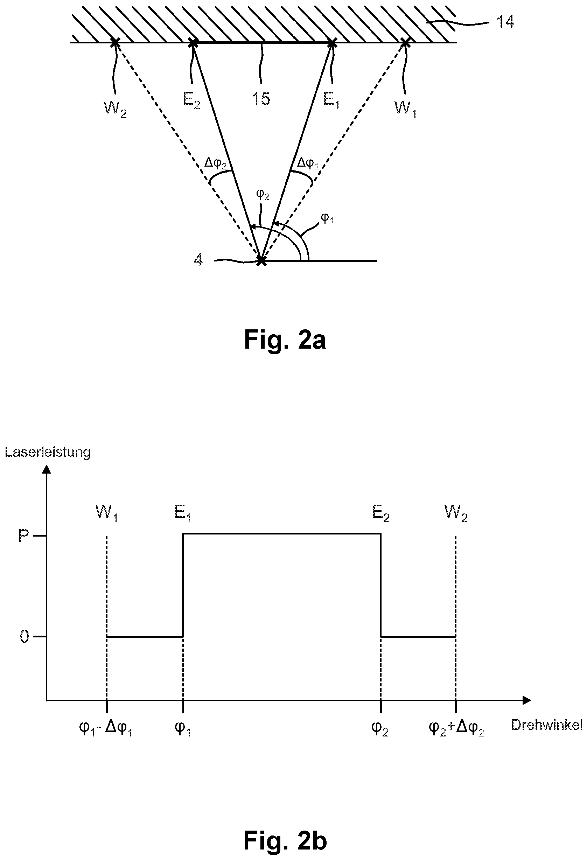

In **Fign. 2a, b** ist eine Variante eines erfindungsgemässen Verfahrens zur Einstellung der Laserleistung dargestellt, bei dem die Laserleistung in Abhängigkeit vom Drehwinkel der Dreheinrichtung 9 eingestellt bzw. gesteuert wird. Dabei zeigen Fig. 2a die Zielfläche 14, auf die der Laserstrahl 5 die Laserlinie 15 zwischen dem ersten Endpunkt E₁ und dem zweiten Endpunkt E₂ erzeugt, und Fig. 2b den Verlauf der Laserleistung in Abhängigkeit vom Drehwinkel der Dreheinrichtung 9.

Der Bediener wählt im Linienmodus des Lasergerätes 1 den Öffnungswinkel der Laserlinie 15 und bestimmt die Position der Laserlinie 15 im Raum. Typische Öffnungswinkel betragen 10°, 45° und 90°. Die Position der Laserlinie 15 im Raum kann durch Drehung der drehbaren Welle 10 um die Rotationsachse 4 um 360° beliebig eingestellt werden.

Mit Hilfe der Encodereinrichtung 16 wird der Drehwinkel der drehbaren Welle 10 bestimmt. Der erste Endpunkt E₁ der Laserlinie 15 entspricht einem ersten Drehwinkel ϕ₁ und der zweite Endpunkt E₂ einem zweiten Drehwinkel ϕ₂. Die Differenz des zweiten Drehwinkels und des ersten Drehwinkels ϕ₂ - ϕ₁ entspricht dem eingestellten Öffnungswinkel der Laserlinie 15. Die Lasereinrichtung 3 wird zwischen einem ersten Wendepunkt **W₁** und einem zweiten Wendepunkt **W₂** um die Rotationsachse 4 hin- und herbewegt.

Die Laserleistung der Strahlquelle 6 wird bei Unterschreiten des ersten Drehwinkels ϕ₁ und bei Überschreiten des zweiten Drehwinkels ϕ₂ von einem konstanten Leistungswert auf Null reduziert. Das Abbremsen und Beschleunigen der drehbaren Welle 10 von einer konstanten Winkelgeschwindigkeit auf Null bzw. von Null auf die Winkelgeschwindigkeit erfolgt in einem Winkelbereich Δϕ₁ zwischen dem ersten Endpunkt E₁ der Laserlinie 15 und dem ersten Wendepunkt W₁ der Lasereinrichtung 3 bzw. in einem Winkelbereich Δϕ₂ zwischen dem zweiten Endpunkt E₂ der Laserlinie 15 und dem zweiten Wendepunkt W₂ der Lasereinrichtung 3.

## Patentansprüche

1. Verfahren zur Einstellung der Laserleistung eines Laserstrahls (5), bei dem eine Lasereinrichtung (3) mittels einer Dreheinrichtung (9) um eine Rotationsachse (4) zwischen einem ersten Wendepunkt (W₁) und einem zweiten Wendepunkt (W₂) hin- und herbewegt wird und bei dem vom Laserstrahl (5) auf einer Zielfläche (14) eine Laserlinie (15) zwischen einem ersten Endpunkt (E₁) und einem zweiten Endpunkt (E₂) erzeugt wird, wobei die Laserleistung des Laserstrahls (5) in Abhängigkeit vom Drehwinkel, der Dreheinrichtung (9) eingestellt wird,
**dadurch gekennzeichnet, dass** die Laserleistung des Laserstrahls (5) bei Unterschreiten eines ersten Drehwinkels (ϕ₁), der dem ersten Endpunkt (E₁) der Laserlinie (15) entspricht, und bei Überschreiten eines zweiten Drehwinkels (ϕ₂), der dem zweiten Endpunkt (E₂) der Laserlinie (15) entspricht, auf Null reduziert wird.

2. Verfahren nach Anspruch 1, **dadurch gekennzeichnet, dass** die Dreheinrichtung (9) in einem ersten Winkelbereich (Δϕ₁) zwischen dem ersten Endpunkt (E₁) der Laserlinie (15) und dem ersten Wendepunkt (W₁) und in einem zweiten Winkelbereich (Δϕ₂) zwischen dem zweiten Endpunkt (E₂) der Laserlinie (15) und dem zweiten Wendepunkt (W₂) abgebremst bzw. beschleunigt wird.

## Claims

1. Method for setting the laser output of a laser beam (5), in which a laser device (3) is moved backwards and forwards by means of a turning gear (9) around an axis of rotation (4) between a first turning point (W₁) and a second turning point (W₂) and in which a laser line (15) between a first end point (E₁) and a second end point (E₂) is produced by the laser beam (5) on a target area (14), in which the laser output of the laser beam (5) is set depending on the angle of rotation of the turning gear (9),
**characterised in that** the laser output of the laser beam (5) is reduced to zero if it falls short of a first angle of rotation (ϕ₁), which corresponds to the first end point (E₁) of the laser line (15), and if it exceeds a second angle of rotation (ϕ₂), which corresponds to the second end point (E₂) of the laser line (15).

2. Method according to claim 1, **characterised in that** the turning gear (9) is speeded up or slowed down in a first angular range (Δϕ₁) between the first end point (E₁) of the laser line (15) and the first turning point (W₁) and in a second angular range (Δϕ₂) between the second end point (E₂) of the laser line (15) and the second turning point (W₂).

## Revendications

1. Procédé pour régler la puissance laser d'un faisceau laser (5), dans lequel un dispositif à laser (3) est déplacé en va et vient au moyen d'un dispositif rotatif (9) autour d'un axe de rotation (4) entre un premier point de changement de direction (W₁) et un second point de changement de direction (W₂), et dans lequel une ligne laser (15) est générée sur une surface cible (14) par le faisceau laser (5) entre un premier point d'extrémité (E₁) et un second point d'extrémité (E₂), dans lequel la puissance laser du faisceau laser (5) est réglée en fonction de l'angle de rotation du dispositif rotatif (9),
**caractérisé en ce que** la puissance laser du faisceau laser (5) est ramenée à zéro en cas de dépassement par le bas d'un premier angle de rotation (Φ₁) correspondant au premier point d'extrémité (E₁) de la ligne laser (15), et en cas de dépassement par le haut d'un second angle de rotation (Φ₂) correspondant au second point d'extrémité (E₂) de la ligne laser (15).

2. Procédé selon la revendication 1, **caractérisé en ce que** le dispositif rotatif (9) est freiné ou accéléré sur une première plage angulaire (Δϕ₁) entre le premier point d'extrémité (E₁) de la ligne laser (15) et le premier point de changement de direction (W₁), et sur une seconde plage angulaire (Δϕ₂) entre le second point d'extrémité (E₂) de la ligne laser (15) et le second point de changement de direction (W₂).
